# EUROPEAN PATENT SPECIFICATION

(11) **EP 1 712 809 B1**
(45) Date of publication and mention of the grant of the patent: **04.03.2009**
(21) Application number: 06006693.3
(22) Date of filing: 30.03.2006
(51) Int. Cl.: F16D 41/06, F16D 43/16

(54) **Unidirectional transmission for an alternator assembly**
Einwegantrieb für eine Wechselstromgeneratoranordnung
Transmission uni-directionnal pour un alternateur

(30) Priority: 12.04.2005 US 594480 P
(43) Date of publication of application: 18.10.2006
(73) Proprietor: Victory Industrial Corporation, Hsi-Chih City, Tapei County 221 (TW)
(72) Inventor: Chung, Pu-Kuan, Hsi-Chih City Tapei County 221 (TW); Hsiung, Ronald, Hsi-Chih City Tapei County 221 (TW)
(74) Representative: Dilg, Haeusler, Schindelmann Patentanwaltsgesellschaft mbH

(56) References cited:
- EP-A1- 1 500 838
- WO-A-20/05100825
- JP-A- 2006 029 437
- US-A- 5 827 143
- US-A1- 2004 178 039
- US-A1- 2004 206 594

## Description

The present invention relates to alternators used in engines, and more particularly to a unidirectional transmission for alternator assemblies.

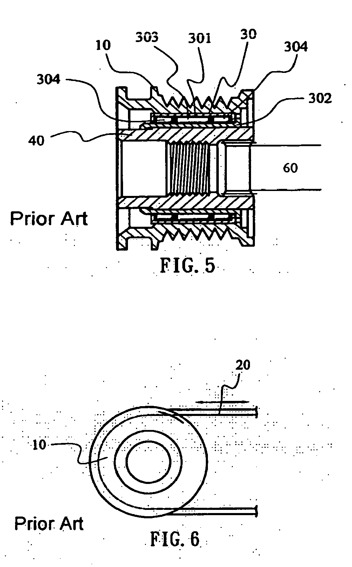

As is known in the art of engine design, an alternator is driven by an engine to generate power for other uses. Fig. 6 illustrates a simplified transmission system in which a passive pulley 10 is usually coupled to the rotor shaft end 60 of the alternator while a multi-groove belt 20 is mounted between the passive pulley 10 and an active pulley (e. g., the engine's cam shaft) to drive the alternator for power generation. During high engine revolutions (e.g., during high speed driving) the pulley 10 and the belt 20 will operate at high speeds. However, when the engine's rpm (revolutions per minute) drops, for example to coast or brake a vehicle, the belt speed will also slow. Due to the centrifugal force of the rotor weight & shaft 60, the inertia of the pulley 20 will resist the instantaneous change in speed of the belt, thereby creating drag between the belt 10 and the pulley 20. The drag creates severe stress (i.e., turning force) on the alternator components which can reduce their usable lifetime. The drag also results in the belt 20 slipping along the pulley 10, during which time the belt 20 is not operating to spin the alternator to generate power. A locked torque condition between the belt and pulley is lost, and the belt is prematurely worn.

Fig. 5 illustrates a conventional unidirectional transmission which is operable to prevent loss of the locked torque condition and wear of the belt. The system includes a unidirectional bearing 30 mounted to the pulley 10, the bearing 30 including an outer ring 301 and an inner ring 302 inserted to each other. The bearing 30 further includes unidirectional needles 303, and two-way needles 304 located between the outer ring 301 and the inner ring 302. Additionally, a bushing 40 is positioned through the inner ring 302 to be coupled to the rotor shaft 60 of the alternator. The unidirectional bearing 30 allows the pulley 10 to idle in case the pulley's rotation decelerates relative to the rotor 60, thereby preventing the loss of a locked torque condition. The two-way needles 304 facilitate easy rotation of the pulley 10 at a different speed from the rotor 60 when the unidirectional needles 301 are in an idle state. However, the unidirectional bearing 30 incorporating both unidirectional and two-way needles 303 and 304 is complex in its manufacture and structure, resulting in high relative expense and failure rate of the bearing 30.
US published patent application 2004/0206594 A1 discloses a starter motor system having a unidirectional clutch system that cooperates with a pulley system according to the preamble of claim 1. Published EP application 1500838 A1 discloses a system having an outer sleeve with inner holes and an inner sleeve with an outer surface having outer holes (24). A cage maintains cams cooperating with the holes, and the cams exert a radial force on the sleeve and on barrettes of the sleeve to tighten the sleeve on a hub so that the barrettes and hub are integrated by friction to transmit torque between a rim and the hub.

What is needed is a simplified unidirectional transmission system for an alternator.

### SUMMARY OF THE INVENTION

The present invention provides a simplified unidirectional transmission for an alternator assembly which employs separate unidirectional and two-way bearings. The particular design provides a compact and simplified transmission structure at lower cost and with higher reliability.

According to the invention the above object is provided by a unidirectional transmission according to claim 1 and an alternator assembly according to claim 6.

These and other aspects of the present invention will be better understood in view of the following drawings and detailed description.

### BRIEF DESCRIPTION OF THE DRAWINGS

Fig. 1 is an exploded view of a unidirectional transmission in accordance with one embodiment of the present invention.
Fig. 2 is a first semi-sectional view of a unidirectional transmission in accordance with one embodiment of the present invention.
Fig. 3 is a schematic view showing an end of the unidirectional transmission in accordance with one embodiment of the present invention.
Fig. 4 is a second semi-sectional view of a unidirectional transmission in accordance with one embodiment of the present invention.
Fig. 5 is a schematic view showing a pulley of the prior art mounted to an alternator of a motor vehicle.
Fig. 6 is a schematic view showing that the application of the pulley of the prior art for the alternator of the motor vehicle.

### DETAILED DESCRIPTION OF EXEMPLARY EMBODIMENTS

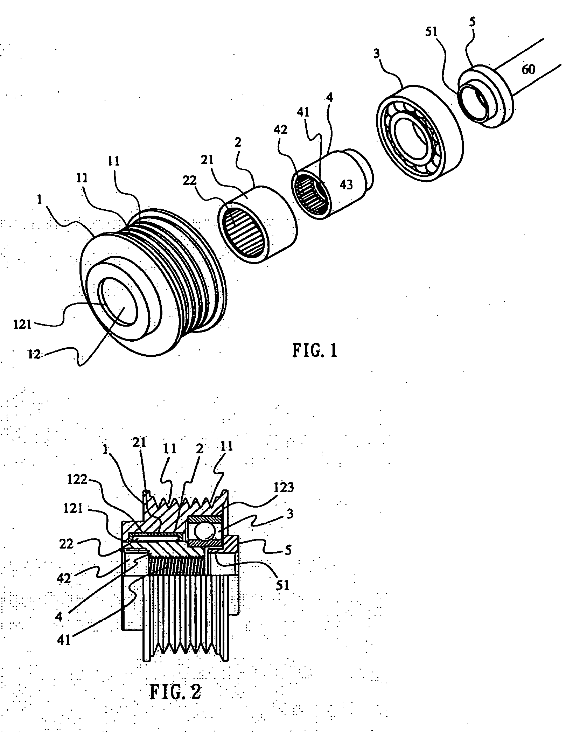

Fig. 1 illustrates an exploded view of a unidirectional transmission in accordance with one embodiment of the present invention. The transmission system includes a pulley 1, a unidirectional bearing 2, a two-way bearing 3, a bushing 4, and a spacer ring 5 disposed at one end of the bushing 4.

As illustrated in Figs. 1, 2, and 3, the pulley 1 includes one or more V-belt grooves 11 disposed on the pulley outer surface, and a stepped axial hole 12 disposed at the center of the pulley 1. The stepped axial hole 12 includes a retainer 121 (foreground) having one end disposed as a protruding ring. A unidirectional bearing recess 122 (Fig. 2) is provided toward the rear of the retainer 121 for receiving the unidirectional bearing 2, the unidirectional bearing recess 122 having a diameter which is larger than that of the stepped axial hole 12. A two-way bearing recess 123 is positioned at the rear (right hand side as shown) of the unidirectional bearing recess 122 for receiving the two-way bearing 3, the two-way bearing recess 123 having a diameter which is larger than that of the unidirectional bearing recess 122.

The unidirectional bearing 2 includes an outer ring 21 and multiple unidirectional needles 22 disposed on the inner circumference thereof. The unidirectional needles 22 are operable to engage or mechanically couple to the outer ring 21 (i.e., provide a substantially positive rotational coupling state between the outer ring 21 and the unidirectional needles 22) when the bearing 2 maintains and/or increases its rotational speed in a particular rotational direction (e.g., clockwise). The unidirectional bearing 2 is further operable to disengage or mechanically decouple from the outer ring 21 (i.e. provide a substantially neutral rotational coupling state between the outer ring 21 and the unidirectional needles 22) when the bearing 2 decreases its rotational speed or reverses rotation (slows in a clockwise direction or rotates counter-clockwise). In a particular embodiment, the unidirectional needles 22 are operable to extend within the inner circumference of the bearing 2 when the bearing 2 maintains or increases its rotational speed in a particular direction, and retract into the bearing 2 when the bearing 2 decreases its rotational speed or reverses direction. By extending into the inner circumference of the bearing 2, the unidirectional needles 22 are operable to grip the rotor shaft 60 during periods when the pulley is rotating at a constant or increasing speed, as will be further described below. In a particular embodiment of the invention, the unidirectional bearing is a conventional bearing, such part number NSK FC-25 from Yung Ho Shun Co., Ltd of Taipei, Taiwan, R.O.C. Once constructed or purchased, the unidirectional bearing 2 is placed into the unidirectional bearing recess 122 within the stepped axial hole 12 of the pulley 1.

The two-way bearing 3 facilitates neutral rotational coupling between (i.e., different rotational speeds) the pulley 1 and rotor 60 when the unidirectional bearing 2 is in an idle state. The unidirectional needles 22 are operable to retract into the unidirectional bearing during bearing rotational deceleration. During this period, the two-way bearing 3 facilitates rotation of the pulley 1 at a different (i.e., slower) speed than the rotor 60. When the rotational speed of the pulley increases again, the unidirectional needles extend and secure the rotor shaft 60, as will be illustrated below. In a particular embodiment of the invention, the unidirectional bearing is a conventional bearing, such part number TPI 6904LU from Tung PEI Industrial Co., Ltd, Taipei, Taiwan, R.O.C. Once constructed or purchased, the needle bearing 3 (Fig. 2) is placed into the needle bearing recess 123 within the stepped axial hole 12 of the pulley 1.

A bushing 4 (Figs. 1, 2, and 3) includes a first end comprising a threaded hole 41 in the illustrated embodiment (extending toward the background in Fig. 1), a second end forming an internal gear ring 42 disposed at one end of the bushing 4 (extending toward the foreground in Fig. 1), and an outer surface 43. The threaded hole 41 is operable to accept a complementary threaded end of the rotor 60. The internal gear ring 42 is positioned at the front (foreground of Figs. 1, 2 and 4) of the retainer 121. The gear ring 42 is used to fasten and loosen the bushing with the assembly. The outer surface 43 is engaged by the unidirectional needles 22 during periods when the needles 22 are extended when the bearing 2 (and accordingly, the pulley 1) are at a constant rotational velocity or when the velocity is increasing in a particular direction. In this manner, the rotational speed of the pulley 1 is transferred to the rotor shaft 60 when the pulley's rotational speed is not decelerating.

The spacer ring 5 (Figs. 1 and 2) includes a protruding ring 51 which extends into the needle bearing 3 and which contacts the rear end of the rotor shaft coupling part 41 of the bushing 4. The spacer ring 5 provides a resilient protective barrier for the two-way bearing 3.

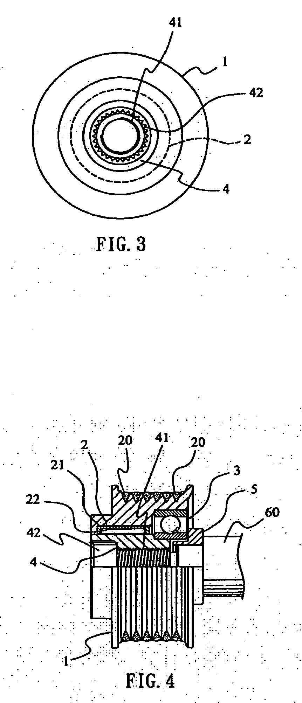

In the foregoing manner, the unidirectional transmission gear for the alternator of the motor vehicle is assembled and mounted to the outer end of an alternator rotor shaft 60 as illustrated in Fig. 4. A belt 20 connected to the engine of the motor vehicle mounts on those grooves 11 of the pulley 1 to drive the alternator in positive revolution for ensured locking torque and extended service life of the belt 20.

In a particular embodiment, the rotor shaft 60 is fastened onto the rotor shaft coupling part 41. When the belt 20 drives the pulley 1 to engage at a proper rotational speed, the unidirectional needles 21 drive the outer surface 43 of the bushing 4, the bushing 4 turning the rotor shaft 60. When the rotational speed of the pulley decreases, the unidirectional bearing 2 idles (e.g., the unidirectional needles 21 retract), thereby suspending rotation of the bushing 4 and the rotor shaft 60. In this instance, the two-way bearing 3 facilitates rotation of the pulley 11 at a different speed from the rotor 60. Accordingly, the system is able to absorb the differences in belt speeds while protecting the rotor shaft 60 and alternator related components. Moreover, by providing separate unidirectional and two-way bearings 4 and 3, respectively, the design of the present invention provides lower operation cost, greater reliability and compact design.

The unidirectional transmission shown in Figs. 1-4 may be provided at various of integration in accordance with the present invention. In one embodiment, the unidirectional transmission is provided separately from the alternator, and in such an instance, includes the two-way bearing 3, and the unidirectional bearing 4. The two-way bearing 3 is coupled between the pulley 1 and the rotor shaft 60 and is operable to provide substantially neutral (i.e., free and unimpeded) rotational coupling between the pulley 1 and the rotor shaft 60. The unidirectional bearing 4, housed separately from the two-way bearing 3, is coupled between the pulley 1 and rotor shaft 60, and is operable to provide substantially positive rotational coupling between the pulley 1 and rotor shaft 60 when the pulley 1 increases its rotational speed in a predefined rotational direction, and operable to provide substantially neutral rotational coupling between the pulley 1 and rotor shaft 60 when the pulley 1 decreases its rotational speed in the predefined rotational direction. Further particularly, the unidirectional bearing 4 is further operable to provide the aforementioned positive rotational coupling between the pulley 1 and rotor shaft 60 when the pulley maintains it rotational speed in the predefined direction.

In the later embodiment in which the transmission system is incorporated into an alternator, each of the components 1, 2, 3, 4 and 5 are included into the housing of the pulley 1 as shown in Figs. 2-4, and the pulley 1 attached to the rotor shaft 60 of the alternator, the entire assembly provided as a integrated assembly.

As readily appreciated by those skilled in the art, the described unidirectional transmission and alternator may be implemented in various applications, such as in the automotive, boating, or aircraft industries. Furthermore, the foregoing description has been presented for purposes of illustration and description. It is not intended to be exhaustive or to limit the invention to the precise form disclosed, and obviously many modifications and variations are possible in light of the disclosed teaching. The described embodiments were chosen in order to best explain the principles of the invention and its practical application to thereby enable others skilled in the art to best utilize the invention in various embodiments and with various modifications as are suited to the particular use contemplated. It is intended that the scope of the invention be defined solely by the claims appended hereto.

## Claims

1. A unidirectional transmission gear for an alternator assembly, unidirectional transmission gear including a pulley (1) operable to rotate at increasing and decreasing speeds, and a rotor shaft (60) operable to spin the alternator, the pulley (1) including a rotor-shaft side from which the rotor shaft (60) extends, the unidirectional transmission gear comprising:
a two-way bearing (3) coupled between the pulley (1) and the rotor shaft (60), the two-way bearing (3) operable to provide substantially neutral rotational coupling between the pulley (1) and the rotor shaft (60); and
a unidirectional bearing (2) coupled between the pulley (1) and rotor shaft (60) and housed separately from the two-way bearing (3), the unidirectional bearing (2) operable to provide substantially positive rotational coupling between the pulley (1) and rotor shaft (60) when the pulley (1) increases its rotational speed in a predefined rotational direction, and operable to provide substantially neutral rotational coupling between the pulley (1) and rotor shaft (60) when the pulley (1) decreases its rotational speed in the predefined rotational direction,
**characterized in that**
the pulley (1) includes a first stepped-axial recess (122) for receiving the unidirectional bearing (2) from the rotor-shaft side of the pulley (1), and a second stepped-axial recess (123) for receiving the two-way bearing (3) from the rotor-shaft side of the pulley (1).

2. The unidirectional transmission of claim 1, wherein the unidirectional bearing (2) is further operable to provide substantially positive rotational coupling between the pulley (1) and rotor shaft (60) when the pulley (1) maintains its rotational speed in the predefined rotational direction.

3. The unidirectional transmission of one of claims 1-2, further comprising a bushing (4) having a first end (41) coupled to the rotor shaft (60) and an outer surface (43),
wherein the unidirectional bearing (2) comprises a plurality of unidirectional needles (22) operable to mechanically couple to the outer surface (43) of the bushing (4) when the pulley (1) increases its rotational speed in the predefined rotational direction.

4. The unidirectional transmission of claim 3, wherein the unidirectional bearing (2) comprises a plurality of unidirectional needles (22) operable to mechanically decouple from the outer surface (43) of the bushing (4) when the pulley (1) decreases its rotational speed in the predefined rotational direction.

5. The unidirectional transmission of claim 3, wherein the plurality of unidirectional needles (22) are operable to mechanically couple to the outer surface (43) of the bushing (4) when the pulley (1) maintains its rotational speed in the predefined rotational direction.

6. An alternator assembly, comprising
a pulley (1) operable to rotate at increasing and decreasing speeds,
a rotor shaft (60) operable to spin the alternator; and
a unidirectional transmission gear comprising:
a two-way bearing (3) coupled between the pulley (1) and the rotor shaft (60), the two-way bearing (3) operable to provide substantially neutral rotational coupling between the pulley (1) and the rotor shaft (60); and
a unidirectional bearing (2) coupled between the pulley (1) and rotor shaft (60) and housed separately from the two-way bearing (3), the unidirectional bearing (2) operable to provide substantially positive rotational coupling between the pulley (1) and rotor shaft (60) when the pulley (1) increases its rotational speed in a predefined rotational direction, and operable to provide substantially neutral rotational coupling between the pulley (1) and rotor shaft (60) when the pulley (1) decreases its rotational speed in the predefined rotational direction,
**characterized in that**
the pulley (1) includes a rotor-shaft side from which the rotor shaft (60) extends, said pulley (1) further including a first stepped-axial recess (122) for receiving the unidirectional bearing (2) from the rotor-shaft side of the pulley (1), and a second stepped-axial recess (123) for receiving the two-way bearing (3) from the rotor-shaft side of the pulley (1).

7. The alternator assembly of claim 6, wherein the unidirectional bearing (2) is further operable to provide substantially positive rotational coupling between the pulley (1) and rotor shaft (60) when the pulley (1) maintains its rotational speed in the predefined rotational direction.

8. The alternator assembly of one of claims 6-7, further comprising a bushing (4) having a first end (41) coupled to the rotor shaft (60) and an outer surface (43), wherein the unidirectional bearing (2) comprises a plurality of unidirectional needles (22) operable to mechanically couple to the outer surface (43) of the bushing (4) when the pulley (1) increases its rotational speed in the predefined rotational direction.

9. The alternator assembly of claim 8, wherein the unidirectional bearing (2) comprises a plurality of unidirectional needles (22) operable to mechanically decouple from the outer surface (43) of the bushing (4) when the pulley (1) decreases its rotational speed in the predefined rotational direction.

10. The alternator assembly of claim 8, wherein the plurality of unidirectional needles (22) is operable to mechanically couple to the outer surface (43) of the bushing (4) when the pulley (1) maintains its rotational speed in the predefined rotational direction

## Patentansprüche

1. Ein unidirektionales Übersetzungsgetriebe für eine Generatorbaugruppe, das unidirektionale Übersetzungsgetriebe aufweisend eine Scheibe (1) betreibbar zum Rotieren bei zunehmenden und abnehmenden Geschwindigkeiten, und eine Rotorachse (60) betreibbar zum Drehen des Generators, die Scheibe (1) aufweisend eine Rotorachsenseite, von der sich die Rotorachse (60) erstreckt, das unidirektionale Übersetzungsgetriebe aufweisend:
ein Zweiwegelager (3) gekoppelt zwischen der Scheibe (1) und der Rotorachse (60), das Zweiwegelager (3) betreibbar zum Bereitstellen einer im Wesentlichen neutralen Rotationskopplung zwischen der Scheibe (1) und der Rotorachse (60); und
ein unidirektionales Lager (2) gekoppelt zwischen der Scheibe (1) und der Rotorachse (60) und untergebracht separat von dem Zweiwegelager (3), das unidirektionale Lager (2) betreibbar zum Bereitstellen einer im Wesentlichen positiven Rotationskopplung zwischen der Scheibe (1) und der Rotorachse (60), wenn die Scheibe (1) ihre Rotationsgeschwindigkeit in einer vordefinierten Rotationsrichtung erhöht, und betreibbar zum Bereitstellen einer im Wesentlichen neutralen Rotationskopplung zwischen der Scheibe (1) und der Rotorachse (60), wenn die Scheibe (1) ihre Rotationsgeschwindigkeit in der vordefinierten Rotationsrichtung verringert, **dadurch gekennzeichnet, dass**
die Scheibe (1) eine erste abgestuft-axiale Aussparung (122) aufweist zum Empfangen des unidirektionalen Lagers (2) von der Rotorachsenseite der Scheibe (1), und eine zweite abgestuft-axiale Aussparung (123) zum Empfangen des Zweiwegelagers (3) von der Rotorachsenseite der Scheibe (1).

2. Die unidirektionale Übersetzung nach Anspruch 1, wobei das unidirektionale Lager (2) weiterhin betreibbar ist, um eine im Wesentlichen positive Rotationskopplung zwischen der Scheibe (1) und der Rotorachse (60) bereitzustellen, wenn die Scheibe (1) ihre Rotationsgeschwindigkeit in der vordefinierten Rotationsrichtung aufrechterhält.

3. Die unidirektionale Übersetzung nach einem der Ansprüche 1 bis 2, weiterhin aufweisend eine Hülse (4) aufweisend ein erstes Ende (41) gekoppelt zu der Rotationsachse (60) und eine äußere Oberfläche (43),
wobei das unidirektionale Lager (2) eine Mehrzahl von unidirektionalen Nadeln (22) aufweist betreibbar zum mechanischen Koppeln zu der äußeren Oberfläche (43) der Hülse (4), wenn die Scheibe (1) ihre Rotationsgeschwindigkeit in der vordefinierten Rotationsrichtung erhöht.

4. Die unidirektionale Übersetzung nach Anspruch 3, wobei das unidirektionale Lager (2) eine Mehrzahl von unidirektionalen Nadeln (22) aufweist betreibbar zum mechanischen Entkoppeln von der äußeren Oberfläche (43) der Hülse (4), wenn die Scheibe (1) ihre Rotationsgeschwindigkeit in der vordefinierten Rotationsrichtung verringert.

5. Die unidirektionale Übersetzung nach Anspruch 3, wobei die Mehrzahl von unidirektionalen Nadeln (22) betreibbar ist zum mechanischen Koppeln zu der äußeren Oberfläche (43) der Hülse (4), wenn die Scheibe (1) ihre Rotationsgeschwindigkeit in der vordefinierten Rotationsrichtung aufrechterhält.

6. Eine Generatorbaugruppe, aufweisend
eine Scheibe (1) betreibbar zum Rotieren bei zunehmenden und abnehmenden Geschwindigkeiten,
eine Rotorachse (60) betreibbar zum Drehen des Generators; und
ein unidirektionales Übersetzungsgetriebe aufweisend:
ein Zweiwegelager (3) gekoppelt zwischen der Scheibe (1) und der Rotorachse (60), das Zweiwegelager (3) betreibbar zum Bereitstellen einer im Wesentlichen neutralen Rotationskopplung zwischen der Scheibe (1) und der Rotorachse (60); und
ein unidirektionales Lager (2) gekoppelt zwischen der Scheibe (1) und der Rotorachse (60) und untergebracht separat von dem Zweiwegelager (3), das unidirektionale Lager (2) betreibbar zum Bereitstellen einer im Wesentlichen positiven Rotationskopplung zwischen der Scheibe (1) und der Rotorachse (60), wenn die Scheibe (1) ihre Rotationsgeschwindigkeit in einer vordefinierten Rotationsrichtung erhöht, und betreibbar zum Bereitstellen einer im Wesentlichen neutralen Rotationskopplung zwischen der Scheibe (1) und der Rotorachse (60), wenn die Scheibe (1) ihre Rotationsgeschwindigkeit in der vordefinierten Rotationsrichtung verringert, **dadurch gekennzeichnet, dass**
die Scheibe (1) eine Rotorachsenseite aufweist, von der sich die Rotorachse (60) erstreckt, die Scheibe (1) weiterhin aufweisend eine erste abgestuft-axiale Aussparung (122) zum Empfangen des unidirektionalen Lagers (2) von der Rotorachsenseite der Scheibe (1), und eine zweite abgestuft-axiale Aussparung (123) zum Empfangen des Zweiwegelagers (3) von der Rotorachsenseite der Scheibe (1).

7. Die Generatorbaugruppe nach Anspruch 6, wobei das unidirektionale Lager (2) weiterhin betreibbar ist, um eine im Wesentlichen positive Rotationskopplung zwischen der Scheibe (1) und der Rotorachse (60) bereitzustellen, wenn die Scheibe (1) ihre Rotationsgeschwindigkeit in der vordefinierten Rotationsrichtung aufrechterhält.

8. Die Generatorbaugruppe nach einem der Ansprüche 6 bis 7, weiterhin aufweisend eine Hülse (4) aufweisend ein erstes Ende (41) gekoppelt zu der Rotorachse (60) und eine äußere Oberfläche (43), wobei das unidirektionale Lager (2) eine Mehrzahl von unidirektionalen Nadeln (22) aufweist betreibbar zum mechanischen Koppeln zu der äußeren Oberfläche (43) der Hülse (4), wenn die Scheibe (1) ihre Rotationsgeschwindigkeit in der vordefinierten Rotationsrichtung erhöht.

9. Die Generatorbaugruppe nach Anspruch 8, wobei das unidirektionale Lager (2) eine Mehrzahl von unidirektionalen Nadeln (22) aufweist betreibbar zum mechanischen Entkoppeln von der äußeren Oberfläche (43) der Hülse (4), wenn die Scheibe (1) ihre Rotationsgeschwindigkeit in der vordefinierten Rotationsrichtung verringert.

10. Die Generatorbaugruppe nach Anspruch 8, wobei die Mehrzahl von unidirektionalen Nadeln (22) betreibbar ist zum mechanischen Koppeln zu der äußeren Oberfläche (43) der Hülse (4), wenn die Scheibe (1) ihre Rotationsgeschwindigkeit in der vordefinierten Rotationsrichtung aufrechterhält.

## Revendications

1. Un engrenage de transmission unidirectionnelle pour un assemblage d'alternateur, l'engrenage de transmission unidirectionnelle comportant une poulie (1) adaptée pour fonctionner en rotation à des vitesses croissantes et décroissantes, et un arbre rotor (60) adapté pour faire tourner l'alternateur, la poulie (1) incluant un côté d'arbre rotor à partir duquel l'arbre rotor (60) s'étend, l'engrenage de transmission unidirectionnelle comportant :
- un roulement à deux voies (3) couplé entre la poulie (1) et l'arbre rotor (60), le roulement à deux voies (3) étant adapté pour fournir un accouplement en grande partie en rotation neutre entre la poulie (1) et l'arbre rotor (60) ; et
- un roulement unidirectionnel (2) couplé entre la poulie (1) et l'arbre rotor (60) et logé séparément du roulement à deux voies (3), le roulement unidirectionnel (2) étant adapté pour fournir un accouplement en grande partie en rotation positive entre la poulie (1) et l'arbre rotor (60) quand la poulie accroît sa vitesse de rotation dans une direction de rotation prédéfinie, et adapté pour fournir un accouplement en grande partie en rotation neutre entre la poulie (1) et l'arbre rotor (60) quand la poulie décroît sa vitesse de rotation dans la direction de rotation prédéfinie, **caractérisé en ce que** :
- la poulie (1) comporte un premier évidemment axial à paliers (122) pour recevoir le roulement unidirectionnel (2) à partir du côté d'arbre rotor de la poulie (1), et un second évidemment axial à paliers (123) pour recevoir le roulement à deux voies (3) à partir du côté d'arbre rotor de la poulie (1).

2. La transmission unidirectionnelle selon la revendication 1, dans laquelle le roulement unidirectionnel (2) est en outre adapté pour fournir un accouplement en grande partie en rotation positive entre la poulie (1) et l'arbre rotor (60) quand la poulie (1) maintient sa vitesse de rotation dans la direction de rotation prédéfinie.

3. La transmission unidirectionnelle selon l'une des revendications 1 ou 2, comprenant en outre un manchon (4) comportant une première extrémité (41) couplée à l'arbre rotor (60) et une surface extérieure (43),
dans laquelle le roulement unidirectionnel (2) comprend une pluralité d'aiguilles unidirectionnelles (22) adaptées pour être couplées mécaniquement à la surface extérieure (43) du manchon (4) quand la poulie (1) accroît sa vitesse de rotation dans la direction de rotation prédéfinie.

4. La transmission unidirectionnelle selon la revendication 3, dans laquelle le roulement unidirectionnel (2) comprend une pluralité d'aiguilles unidirectionnelles (22) adaptées pour se découpler mécaniquement de la surface extérieure (43) du manchon (4) quand la poulie (1) décroît sa vitesse de rotation dans la direction de rotation prédéfinie.

5. La transmission unidirectionnelle selon la revendication 3, dans laquelle la pluralité d'aiguilles unidirectionnelles (22) sont adaptées pour être couplées mécaniquement à la surface extérieure (43) du manchon (4) quand la poulie (1) maintient sa vitesse de rotation dans la direction de rotation prédéfinie.

6. Un assemblage d'alternateur, comprenant :
- une poulie (1) adaptée pour fonctionner en rotation à des vitesses croissantes et décroissantes,
- un arbre rotor (60) adapté pour faire tourner l'alternateur ; et
- un engrenage de transmission unidirectionnelle comportant :
o un roulement à deux voies (3) couplé entre la poulie (1) et l'arbre rotor (60), le roulement à deux voies (3) étant adapté pour fournir un accouplement en rotation en plus grande partie neutre entre la poulie et l'arbre rotor (60) ; et
o un roulement unidirectionnel (2) couplé entre la poulie (1) et l'arbre rotor (60) et logé séparément du roulement à deux voies (3), le roulement unidirectionnel (2) étant adapté pour fournir un accouplement en rotation en grande partie positive entre la poulie (1) et l'arbre rotor (60) quand la poulie (1) accroît sa vitesse de rotation dans une direction de rotation prédéfinie, et étant adapté pour fournir un accouplement en rotation en grande partie neutre entre la poulie (1) et l'arbre rotor (60) quand la poulie (1) décroît sa vitesse de rotation dans la direction de rotation prédéfinie,
**caractérisé en ce que** :
la poulie (1) comporte un côté d'arbre rotor à partir duquel l'arbre rotor (60) s'étend, ladite poulie (1) comprenant en outre un premier évidemment axial à paliers (122) pour recevoir le roulement unidirectionnel (2) à partir du côté d'arbre rotor de la poulie (1), et un second évidemment axial à paliers (123) pour recevoir le roulement à deux voies (3) à partir du côté d'arbre rotor de la poulie (1).

7. L'assemblage d'alternateur selon la revendication 6, dans lequel le roulement unidirectionnel (2) est en outre adapté pour fournir un accouplement en grande partie en rotation positive entre la poulie (1) et l'arbre rotor (60) quand la poulie (1) maintient sa vitesse de rotation dans la direction de rotation prédéfinie.

8. L'assemblage d'alternateur selon l'une des revendications 6 ou 27, comprenant en outre un manchon (4) comportant une première extrémité (41) couplée à l'arbre rotor (60) et une surface extérieure (43),
dans lequel le roulement unidirectionnel (2) comprend une pluralité d'aiguilles unidirectionnelles (22) adaptées pour être couplées mécaniquement à la surface extérieure (43) du manchon (4) quand la poulie (1) accroît sa vitesse de rotation dans la direction de rotation prédéfinie.

9. L'assemblage d'alternateur selon la revendication 8, dans laquelle le roulement unidirectionnel (2) comprend une pluralité d'aiguilles unidirectionnelles (22) adaptées pour se découpler mécaniquement de la surface extérieure (43) du manchon (4) quand la poulie (1) décroît sa vitesse de rotation dans la direction de rotation prédéfinie.

10. L'assemblage d'alternateur selon la revendication 8, dans laquelle la pluralité d'aiguilles unidirectionnelles (22) sont adaptées pour être couplées mécaniquement à la surface extérieure (43) du manchon (4) quand la poulie (1) maintient sa vitesse de rotation dans la direction de rotation prédéfinie.
